# EUROPÄISCHE PATENTSCHRIFT

(11) **EP 1 243 173 B1**
(45) Veröffentlichungstag und Bekanntmachung des Hinweises auf die Patenterteilung: **17.08.2005**
(21) Anmeldenummer: 02005829.3
(22) Anmeldetag: 14.03.2002
(51) Int. Cl.: A01D 41/12

(54) **Schrägfördererkraftsensor zur Erfassung des Gutdurchsatzes eines Mähdreschers**
Elevator conveyor with force sensor for detecting the throughput of a combine
Convoyeur élévateur muni d'un capteur de force pour détecter le débit d'une moissonneuse-batteuse

(30) Priorität: 20.03.2001 US 812651
(43) Veröffentlichungstag der Anmeldung: 25.09.2002
(73) Patentinhaber: DEERE & COMPANY, Moline, Illinois 61265-8098 (US)
(72) Erfinder: Peterson, John Victor, Erie, IL 61250 (US); Cooper, William F., Hawley, MN 56549 (US); Littke, Jerry Dean, Hillsboro, ND 58045 (US); Kis, Janos, Lajosmizse 6050 (HU); Coers, Bruce, Alan, Hillsdale, IL 61257 (US); Teijido, Joseph, Albert, East Moline, IL 61244 (US); Burke, Daniel, James, Cordova, IL 61242 (US); Tsunemori, Travis, Shuji, Geneseo, IL 61254 (US)
(74) Vertreter: Holst, Sönke, Dr.

(56) Entgegenhaltungen:
- DE-A- 1 407 720
- DE-A- 1 482 874
- DE-A- 2 200 133
- FR-A- 1 442 918
- GB-A- 2 107 489
- US-A- 3 073 099
- US-A- 3 606 742
- US-A- 4 130 980
- US-A- 4 337 611
- US-A- 4 513 562

## Beschreibung

Die Erfindung betrifft einen Mähdrescher mit im Eingriff mit dem Erdboden befindlichen Mitteln, die eingerichtet sind, den Mähdrescher mit einer Erntegeschwindigkeit über den Erdboden zu bewegen, einer Drescheinrichtung, einem verstellbaren Antrieb zum Antreiben der Drescheinrichtung, der mittels einer Hydraulikflüssigkeit verstellbar ist und mit einer Steuerung, die eingerichtet ist, die Erntegeschwindigkeit einzustellen.

Landwirtschaftliche Mähdrescher sind große Maschinen, die landwirtschaftliches Gut ernten, dreschen, trennen und reinigen. Das gewonnene saubere Korn wird in einem am Mähdrescher angeordneten Korntank gespeichert. Das saubere Korn kann dann vom Korntank durch einen Entladeschneckenförderer einem Lastwagen, Anhänger oder anderem Aufnahmegefäß zugeführt werden.

Eine Erntegutaufnahmeeinrichtung am vorderen Ende des Mähdreschers erntet das Gut. Das geerntete Gut wird einem Schrägförderer zugeführt, um es an eine Drescheinrichtung abzugeben. Die Drescheinrichtung kann entweder eine konventionelle, quer angeordnete Dreschtrommel und ein Dreschkorb sein, oder ein Dreschrotor. Der Dreschrotor kann axial oder quer angeordnet sein. Die Vorwärtsgeschwindigkeit, mit der der Mähdrescher erntet, gibt die Menge des von der Drescheinrichtung aufgenommenen Materials vor. In der Regel werden die Drescheinrichtungen durch einen Antrieb mit variablem Durchmesser angetrieben. Ein derartiger Antrieb wird derzeit an Mähdreschern der Serie John Deere 50 verwendet, die von der vorliegenden Anmelderin hergestellt werden.

Verschiedene Durchsatzsteuerungssysteme wurden vorgeschlagen, um die Effizienz des Mähdreschers zu verbessern. Einige dieser Systeme erfassen Kornverluste durch Verwendung von Kornverlustmonitoren. Andere Systeme erfassen den Durchsatz an Erntegut und versuchen einen relativ konstanten Durchsatz des Ernteguts aufrechtzuerhalten.

Die der Erfindung zugrunde liegende Aufgabe wird darin gesehen, ein verbessertes Durchsatzsteuerungssystem für einen Mähdrescher bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein landwirtschaftlicher Mähdrescher mit einer tragenden Struktur wird durch im Eingriff mit dem Boden befindliche Mittel, insbesondere Räder, über eine Antriebseinrichtung mit einer Erntegeschwindigkeit angetrieben. Der Mähdrescher ist außerdem mit einer Drescheinrichtung ausgestattet, die durch einen verstellbaren Antrieb angetrieben wird. Der verstellbare Antrieb wird durch unter Druck stehende Hydraulikflüssigkeit verstellt. Ein Hydraulikdrucksensor, der mit der zum Verstellen des Antriebs vorgesehenen Hydraulikflüssigkeit in Verbindung steht, stellt ein aktuelles Hydraulikdrucksignal bereit, das einer elektronischen Steuerung zugeführt wird. Die elektronische Steuerung stellt die Erntegeschwindigkeit (Vorwärtsgeschwindigkeit) des Mähdreschers in Abhängigkeit vom Hydraulikdrucksignal ein.

Auf diese Weise erhält man eine einfache und sicher arbeitende Durchsatzregelung. Das Hydraulikdrucksignal hängt von der Kraft ab, mit der der verstellbare Antrieb verstellt wird. Dadurch enthält es eine Information über das Drehmoment, mit dem die Drescheinrichtung angetrieben wird. Dieses Drehmoment hängt wiederum vom Gutdurchsatz ab, der vom Mähdrescher verarbeitet wird.

Der verstellbare Antrieb kann ein Riemenantrieb sein, der mindestens eine Riemenscheibe aufweist, deren wirksamer Durchmesser - in der Regel durch Bewegen einer Stirnplatte - durch einen Hydraulikzylinder veränderbar ist. In diesem Fall misst der Hydraulikdrucksensor den Druck der Hydraulikflüssigkeit, mit welcher der Hydraulikzylinder beaufschlagt wird.

Weiterhin kann eine Bedienersteuerung in der Bedienerkabine des Mähdreschers vorgesehen sein, die ein Verlustratensignal bereitstellt, das ebenfalls der elektronischen Steuerung zugeführt wird. Die elektronische Steuerung konvertiert das Verlustratensignal in ein gewünschtes Hydraulikdrucksignal, das eine Information über den gewünschten Hydraulikdruck enthält. Die elektronische Steuerung reguliert die Vorwärtsgeschwindigkeit (Erntegeschwindigkeit) des Mähdreschers, so dass das gewünschte Hydraulikdrucksignal gleich dem wirklichen, aktuellen Hydraulikdrucksignal ist, das mit dem Hydraulikdrucksensor gemessen wird.

Eine weitere Verbesserung des Durchsatzsteuerungssystems ist die Verwendung eines Feuchtigkeitssensors im Schrägförderer, um den Feuchtigkeitsgehalt des geernteten Guts zu messen, wenn es den Schrägförderer durchläuft, bevor es in die Drescheinrichtung eintritt. Das Feuchtigkeitssignal wird der elektronischen Steuerung zugeführt und kann verwendet werden, das gewünschte Hydraulikdrucksignal und/oder das aktuelle Hydraulikdrucksignal zu verändern, um derart die Erntegeschwindigkeit des Mähdreschers zu verändern.

Zusätzlich oder alternativ kann das Feuchtigkeitssignal verwendet werden, die Geschwindigkeit des Mähdreschers schnell zu verändern, wenn das Feuchtigkeitssignal bestimmte, festgelegte Grenzen verlässt oder sich die Feuchtigkeit im Vergleich mit vorherigen Ablesungen drastisch ändert. Wenn der Mähdrescher beispielsweise in einen grünen, unkrauthaltigen Bereich auf dem Feld hineinfährt, würde der Feuchtigkeitssensor Erntegut mit hoher Feuchtigkeit signalisieren, so dass die Steuerung den Mähdrescher baldigst verlangsamt, um diese schwere Belastung besser aufnehmen zu können. In ähnlicher Weise würde die Steuerung den Mähdrescher automatisch beschleunigen, wenn er wieder in Erntegutbestände mit normaleren Bedingungen hineinfährt. Wie oben dargelegt, kann das Feuchtigkeitssignal verwendet werden, mindestens eines der Hydraulikdrucksignale zu verändern und/oder mit einem festgelegten Feuchtigkeitsgrenzwert verglichen werden, um die normale Durchsatzsteuerung zu übersteuern, die auf dem aktuellen Hydraulikdruck des verstellbaren Antriebs beruht.

In den Zeichnungen ist ein nachfolgend näher beschriebenes Ausführungsbeispiel der Erfindung dargestellt. Es zeigt:
- Fig. 1: eine halbschematische Seitenansicht eines landwirtschaftlichen Mähdreschers, und

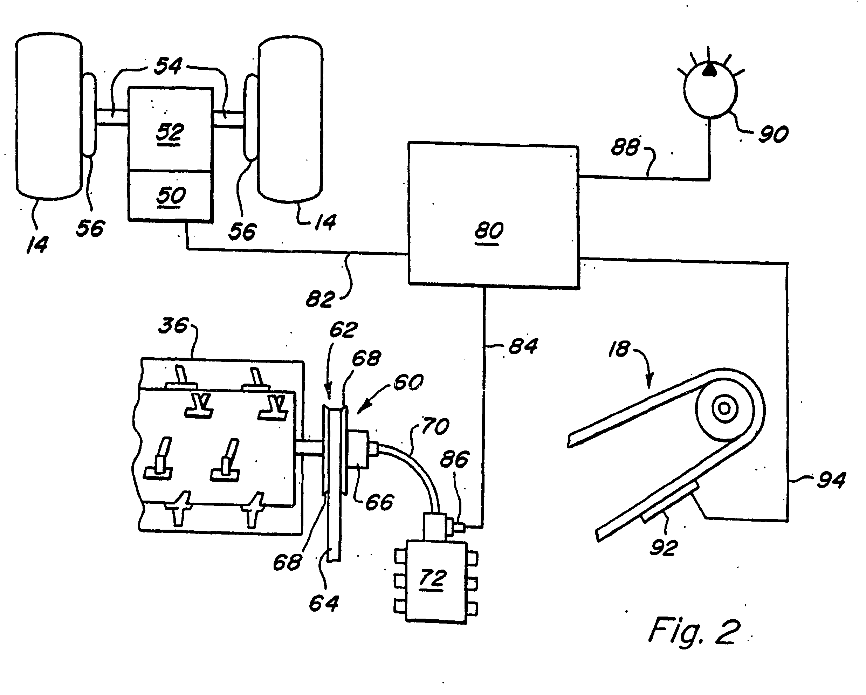

- Fig. 2: ein Schema eines erfindungsgemäßen Durchsatzsteuerungssystems.

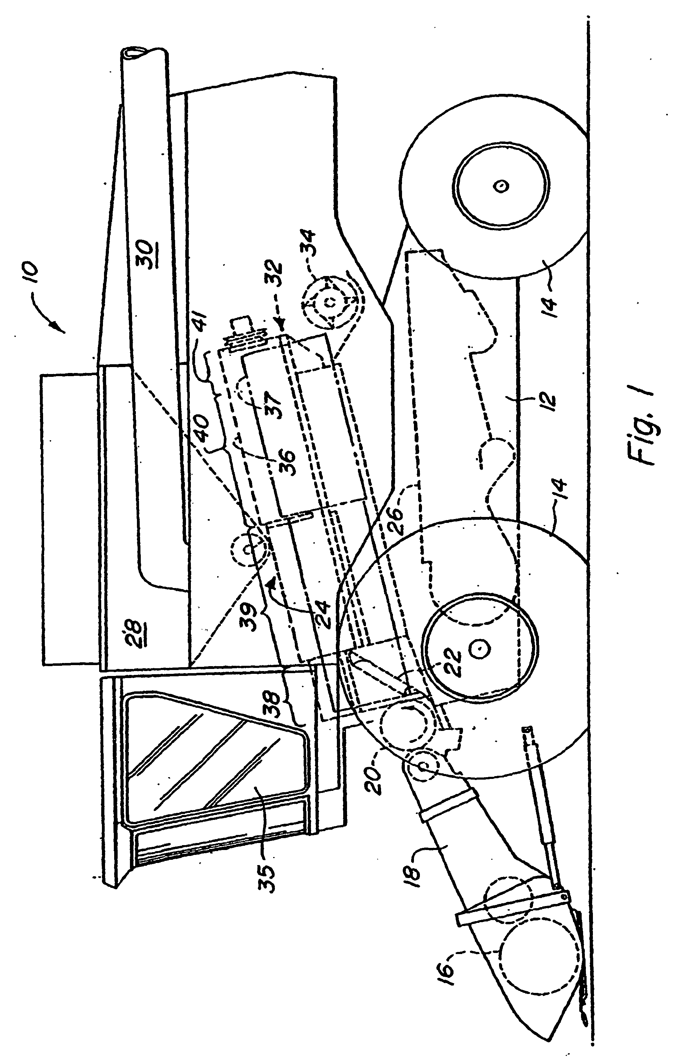

Die Figur 1 zeigt einen landwirtschaftlichen Mähdrescher 10 mit einer tragenden Struktur 12, die mit im Eingriff mit dem Erdboden stehenden Rädern 14 versehen ist. Obwohl der Mähdrescher 10 mit Rädern dargestellt ist, könnte er auch mit zwei oder vier Gleisketten versehen sein. Ein Schneidwerk 16 wird zum Ernten von Erntegut und um es einem Schrägförderer 18 zuzuführen benutzt. Der Schrägförderer 18 enthält eine Fördereinrichtung, um das geerntete Gut einer Leittrommel 20 zuzuführen. Die Leittrommel 20 führt das Gut nach oben durch einen Einlassübergangsabschnitt 22 hindurch und einer drehbaren, zum Dreschen und Trennen eingerichteten Gutbearbeitungseinrichtung 24 zu. Die dargestellte Gutbearbeitungseinrichtung 24 ist im Mähdrescher axial angeordnet, sie könnte aber auch in anderen Orientierungen relativ zur Längsachse des Mähdreschers 10 angeordnet sein. Obwohl die vorliegende Erfindung anhand einer Gutbearbeitungseinrichtung 24 mit einem Rotor beschrieben wird, könnte sie auch an einem Mähdrescher 10 mit einer konventionellen, quer angeordneten Dreschtrommel, die mit einem Dreschkorb zusammenwirkt, verwendet werden.

Die Gutbearbeitungseinrichtung 24 drischt und trennt das geerntete Gut. Das Korn und die Spreu fallen durch Roste am Boden der Gutbearbeitungseinrichtung 24 in ein Reinigungssystem 26. Das Reinigungssystem 26 entfernt die Spreu und führt das saubere Korn einem (nicht gezeigten) Elevator für sauberes Korn zu. Der Elevator für sauberes Korn legt das Korn in einem Korntank 28 ab. Das saubere Korn im Korntank 28 kann durch einen Entladeschneckenförderer 30 einem Lastwagen oder Anhänger zugeführt werden.

Ausgedroschenes, vom Korn befreites Stroh wird von der Gutbearbeitungseinrichtung 24 durch einen Auslass 32 einer Auswurftrommel 34 zugeführt. Die Auswurftrommel 34 stößt das Stroh wiederum an der Rückseite des Mähdreschers 10 aus. Es ist anzumerken, dass die Auswurftrommel 34 das vom Korn befreite Gut auch direkt einem Strohhäcksler zuführen könnte. Der Betrieb des Mähdreschers 10 wird von einer Bedienerkabine 35 aus gesteuert.

Die Gutbearbeitungseinrichtung 24 umfasst ein zylindrisches Rotorgehäuse 36 und einen im Rotorgehäuse 36 angeordneten, drehbaren Rotor 37. Der vordere Teil des Rotors 37 und das Rotorgehäuse 36 definieren einen Beschickungsabschnitt 38. Stromab des Beschickungsabschnitts 38 sind ein Dreschabschnitt 39, ein Trennabschnitt 40 und ein Auslassabschnitt 41. Der Rotor 37 ist im Beschickungsabschnitt 38 mit einer konischen Rotortrommel versehen, die wendelförmige Beschickungselemente zum Eingreifen in Gut aufweist, das sie von der Leittrommel 20 und vom Einlassübergangsbereich 22 erhält. Unmittelbar stromab des Beschickungsabschnitts 38 befindet sich der Dreschabschnitt 39. Im Dreschabschnitt 39 weist der Rotor 37 eine zylindrische Rotortrommel auf, die mit einer Anzahl von Dreschelementen versehen ist, um das vom Beschickungsabschnitt 38 erhaltene Gut zu dreschen. Stromab des Dreschabschnitts 39 befindet sich der Trennabschnitt 40, in dem das im gedroschenen Gut noch enthaltene Korn freigesetzt wird und durch ein bodenseitiges Rost im Rotorgehäuse 36 hindurch in das Reinigungssystem 28 fällt. Der Trennabschnitt 40 geht in den Auslassabschnitt 41 über, in dem das vom Korn befreite Gut (Stroh) aus der Gutbearbeitungseinrichtung 24 ausgestoßen wird.

Die vorderen Räder 14 des Mähdreschers 10 werden durch ein hydrostatisches Getriebe 50 angetrieben. Das hydrostatische Getriebe 50 wird auf konventionelle Weise durch einen nicht gezeigten Verbrennungsmotor angetrieben. Das hydrostatische Getriebe 50 treibt wiederum ein Schaltgetriebe 52 an. Zwei treibende Wellen 54 erstrecken sich vom Schaltgetriebe 52 nach außen und treiben Endantriebe 56 der vorderen Räder 14 an. Das hydrostatische Getriebe 50 umfasst eine Pumpeneinheit und eine Motoreinheit. Die Pumpeneinheit und/oder die Motoreinheit sind mit einstellbaren Taumelplatten ausgestattet. Die einstellbaren Taumelplatten steuern die Ausgangsgeschwindigkeit des Getriebes 50 und dessen Drehrichtung. Elektromagnetisch gesteuerte Steuerventile steuern die Positionen der Taumelplatten. Die lenkbaren hinteren Räder 14 können auch durch Radmotore angetrieben werden, die direkt an den Rädern 14 befestigt sind. Die Geschwindigkeit der Radmotore kann durch das unten beschriebene Durchsatzsteuerungssystem gesteuert werden.

Ein verstellbarer Antrieb 60 mit variablem Drehmoment treibt den Rotor 37 an. Derselbe Verbrennungsmotor, der auch das hydrostatische Getriebe 50 antreibt, treibt auch den verstellbaren Antrieb 60 an. Der verstellbare Antrieb 60 ist ein Riementrieb, der eine nicht gezeigte antreibende Riemenscheibe mit variablem Durchmesser und eine angetriebene Riemenscheibe mit variablem Durchmesser umfasst. Ein Riemen 64 erstreckt sich zwischen der antreibenden Riemenscheibe und der angetriebenen Riemenscheibe 62, um Rotationsleistung zu übertragen. Hydraulikzylinder steuern die Durchmesser der Riemenscheiben. Der Hydraulikzylinder 66 ist mit der angetriebenen Riemenscheibe 62 gekoppelt und bewegt die Stirnplatten 68 der Riemenscheibe 62 nach innen bzw. außen, um den wirksamen Durchmesser der Riemenscheibe 62 gegenüber dem Riemen 64 zu steuern. Durch eine Änderung des wirksamen Durchmessers der Riemenscheiben wird die effektive Geschwindigkeit der angetriebenen Riemenscheibe 62 geändert. Durch eine Hydraulikleitung 70 wird dem Hydraulikzylinder 66 unter Druck stehende Hydraulikflüssigkeit von einem Ventilzusammenbau 72 zugeführt. Der Rotor 37 wird durch die Riemenscheiben variablen Durchmessers mit einer konstanten, ausgewählten Rotorgeschwindigkeit angetrieben. Das vom Riemen 64 und den Riemenscheiben übertragene Drehmoment variiert mit dem Gutdurchsatz. Variationen des Durchsatzes haben Änderungen der Verlustraten zur Folge. Der Durchsatz steht direkt mit den Verlustraten in Beziehung.

Eine elektronische Steuerung 80 steuert die Erntegeschwindigkeit des Mähdreschers 10. Das bedeutet, dass die elektronische Steuerung 80 die Vorwärtsgeschwindigkeit (Erntegeschwindigkeit) des Mähdreschers 10 durch ein Einstellen der Position der Taumelplatten des hydrostatischen Getriebes 50 einstellt, indem der Betrieb der elektromagnetisch betätigten Steuerventile über eine Leitung 82 gesteuert wird. Die Steuerung 80 empfängt durch die Leitung 84 ein aktuelles Hydraulikdrucksignal von einem Hydraulikdrucksensor 86. Der Hydraulikdrucksensor 86 fühlt den Hydraulikdruck des Hydraulikzylinders 66, der den Antrieb 60 mit variablem Drehmoment verstellt. Es wurde herausgefunden, dass der Hydraulikdruck, mit dem der Hydraulikzylinder 66 den Antrieb 60 verstellt, mit dem Durchsatz und darüber mit der Verlustrate in Beziehung steht. Die Steuerung 80 empfängt außerdem über eine Leitung 88 von einem Schalter 90 ein Sollverlustratensignal, das eine Information über eine gewünschte Verlustrate enthält. Der Schalter 90 ist in der Bedienerkabine 35 angeordnet.

Wenn der Bediener das Durchsatzsteuerungssystem betreibt, wählt er am Schalter 90 eine gewünschte Verlustrate aus. Die Steuerung 80 empfängt dieses Sollverlustratensignal und setzt es in ein gewünschtes Hydraulikdrucksignal um. Die Steuerung 80 empfängt auch das aktuelle Hydraulikdrucksignal vom Hydraulikdrucksensor 86. Die Steuerung 80 regelt die Vorwärtsgeschwindigkeit des Mähdreschers 10, so dass das gewünschte Hydraulikdrucksignal gleich dem wirklichen Hydraulikdrucksignal ist.

In einer weiteren Verfeinerung des Systems ist der Schrägförderer 18 mit einem Feuchtigkeitssensor 92 ausgestattet, der über eine Leitung 94 mit der Steuerung 80 kommuniziert. Der Feuchtigkeitssensor 92 fühlt die Feuchtigkeit im Erntegut, das den Schrägförderer 18 durchläuft. Das Feuchtigkeitssignal kann dazu verwendet werden, das Signal über den wirklichen Hydraulikdruck oder das Signal über den gewünschten Hydraulikdruck zu verändern, um den Mähdrescher 10 zu verlangsamen, wenn er Erntegut mit hoher Feuchtigkeit aufnimmt.

Gemeinsam mit der oben beschriebenen Signaländerung oder alternativ dazu kann das Feuchtigkeitssignal benutzt werden, die Erntegeschwindigkeit des Mähdreschers 10 direkt einzustellen. Wenn das Erntegutfeuchtigkeitsniveau höher als ein festgelegter Betrag ist, wird der Mähdrescher 10 um einen bestimmten Betrag verlangsamt. Wenn der Mähdrescher 10 beispielsweise ein unkrauthaltiges, grünes Erntegut aufnimmt, wird der Feuchtigkeitssensor 92 eine gesteigerte Feuchtigkeit messen. Das Feuchtigkeitssignal wird über die Leitung 94 der Steuerung 80 zugeführt. Die dieses Signal empfangende Steuerung 80 wird zuerst feststellen, ob die Erntegutfeuchtigkeit oberhalb eines festgelegten Betrags liegt, und wenn das der Fall ist, wird die Steuerung 80 den Mähdrescher 10 sofort verlangsamen.

## Patentansprüche

1. Mähdrescher (10), mit im Eingriff mit dem Erdboden befindlichen Mitteln, die eingerichtet sind, den Mähdrescher (10) mit einer Erntegeschwindigkeit über den Erdboden zu bewegen, einer Drescheinrichtung, einem verstellbaren Antrieb (60) zum Antreiben der Drescheinrichtung, der mittels einer Hydraulikflüssigkeit verstellbar ist und mit einer Steuerung (80), die eingerichtet ist, die Erntegeschwindigkeit einzustellen, **dadurch gekennzeichnet, dass** ein Hydraulikdrucksensor (86) den Hydraulikdruck der Hydraulikflüssigkeit zum Verstellen des Antriebs der Drescheinrichtung fühlt und ein Hydraulikdrucksignal bereitstellt, und dass die Steuerung (80) die Erntegeschwindigkeit in Abhängigkeit von dem Hydraulikdruck einstellt, der vom Hydraulikdrucksensor (86) gemessen wird.

2. Mähdrescher (10) nach Anspruch 1, **dadurch gekennzeichnet, dass** wenigstens ein Hydraulikzylinder (66) den Antrieb (60) verstellt, insbesondere durch Verstellen einer Riemenscheibe (62), und dass der Hydraulikdrucksensor (86) den Hydraulikdruck fühlt, mit dem der Hydraulikzylinder (66) beaufschlagt wird.

3. Mähdrescher (10) nach Anspruch 1 oder 2, **dadurch gekennzeichnet, dass** die Steuerung (80) mit einem durch einen Bediener eingebbaren Sollverlustratensignal beaufschlagbar ist.

4. Mähdrescher (10) nach Anspruch 3, **dadurch gekennzeichnet, dass** die Steuerung (80) das Sollverlustratensignal in ein gewünschtes Hydraulikdrucksignal umwandelt, das gemeinsam mit dem aktuellen Hydraulikdrucksignal die Erntegeschwindigkeit der im Eingriff mit dem Erdboden befindlichen Mittel steuert.

5. Mähdrescher (10) nach einem der Ansprüche 1 bis 4, **dadurch gekennzeichnet, dass** der Mähdrescher (10) einen Schrägförderer (18) umfasst, der mit einem Feuchtigkeitssensor (92) zur Messung der Feuchtigkeit des den Schrägförderer (18) durchlaufenden Ernteguts ausgestattet ist, welcher der Steuerung (80) ein Feuchtigkeitssignal zuführt.

6. Mähdrescher (10) nach Anspruch 5, **dadurch gekennzeichnet, dass** die Steuerung (80) das Feuchtigkeitssignal verwendet, um das gewünschte Hydraulikdrucksignal und/oder das wirkliche Hydraulikdrucksignal zu verändern.

7. Mähdrescher (10) nach Anspruch 5 oder 6, **dadurch gekennzeichnet, dass** die Steuerung (80) das Feuchtigkeitssignal verwendet, die Erntegeschwindigkeit direkt zu verändern.

8. Verfahren zum Steuern der Erntegeschwindigkeit eines Mähdreschers (10), der einen verstellbaren Antrieb (60) zum Antreiben einer Drescheinrichtung aufweist, mit folgenden Schritten: Fühlen des Hydraulikdrucks der zum Verstellen des Antriebs der Drescheinrichtung (60) dienenden Hydraulikflüssigkeit und Bilden eines aktuellen Hydraulikdrucksignals, und Einstellen der Erntegeschwindigkeit des Mähdreschers aufgrund des aktuellen Hydraulikdrucksignals.

9. Verfahren nach Anspruch 8, **gekennzeichnet durch** den zusätzlichen Schritt der Eingabe einer gewünschten Verlustrate in eine Steuerung (80) und Umsetzen der gewünschten Verlustrate in ein gewünschtes Hydraulikdrucksignal.

10. Verfahren nach Anspruch 8 oder 9, **dadurch gekennzeichnet, dass** das Einstellen der Erntegeschwindigkeit ein Gleichmachen des aktuellen Hydraulikdrucksignals mit dem gewünschten Hydraulikdrucksignal zur Folge hat.

11. Verfahren nach einem der Ansprüche 8 bis 10, **dadurch gekennzeichnet, dass** in weiteren Schritten der Feuchtigkeitsgehalt des einen Schrägförderer (18) durchlaufenden Guts gemessen wird, dass ein Feuchtigkeitssignal erzeugt wird und dass das Feuchtigkeitssignal der Steuerung (80) zugeführt wird.

12. Verfahren nach Anspruch 11, **dadurch gekennzeichnet, dass** das Feuchtigkeitssignal verwendet wird, um das gewünschte Hydraulikdrucksignal und/oder das wirkliche Hydraulikdrucksignal zu verändern.

13. Verfahren nach Anspruch 11 oder 12, **dadurch gekennzeichnet, dass** das Feuchtigkeitssignal verwendet wird, die Erntegeschwindigkeit direkt zu regeln.

## Claims

1. Combine-harvester (10), with elements engaging with the ground, which are fitted to move the combine-harvester (10) over the ground at a harvesting speed, with a thresher, an adjustable drive (60) for driving the thresher, which is adjustable by means of a hydraulic fluid, and with a control unit (80), which is fitted to adjust the harvesting speed, **characterised in that** a hydraulic pressure sensor (86) senses the hydraulic pressure of the hydraulic fluid to adjust the drive of the thresher and supplies a hydraulic pressure signal, and that the control unit (80) sets the harvesting speed in dependence on the hydraulic pressure measured by the hydraulic pressure sensor (86).

2. Combine-harvester (10) according to Claim 1, **characterised in that** at least one hydraulic cylinder (66) adjusts the drive (60), in particular by adjusting a pulley (62), and that the hydraulic pressure sensor (86) senses the hydraulic pressure, which acts on the hydraulic cylinder (66).

3. Combine-harvester (10) according to Claim 1 or 2, **characterised in that** the control unit (80) can be fed a set loss rate signal, which can be input by an operator.

4. Combine-harvester (10) according to Claim 3, **characterised in that** the control unit (80) converts the set loss rate signal into a desired hydraulic pressure signal, which jointly with the current hydraulic pressure signal controls the harvesting speed of the elements engaging with the ground.

5. Combine-harvester (10) according to one of Claims 1 to 4, **characterised in that** the combine-harvester (10) comprises an inclined conveyor (18), which is fitted with a moisture sensor (92) to measure the moisture of the crop material passing over the inclined conveyor (18), which supplies a moisture signal to the control unit (80).

6. Combine-harvester (10) according to Claim 5, **characterised in that** the control unit (80) uses the moisture signal to vary the desired hydraulic pressure signal and/or the actual hydraulic pressure signal.

7. Combine-harvester (10) according to Claim 5 or 6, **characterised in that** the control unit (80) uses the moisture signal to directly vary the harvesting speed.

8. Method for controlling the harvesting speed of a combine-harvester (10), which has an adjustable drive (60) to drive a thresher, with the following steps:
sensing the hydraulic pressure of the hydraulic fluid serving to adjust the drive (60) of the thresher and
forming a current hydraulic pressure signal, and
setting the harvesting speed of the thresher on the basis of the current hydraulic pressure signal.

9. Method according to Claim 8, **characterised by** the additional step of inputting a desired loss rate into a control unit (80) and converting the desired loss rate into a desired hydraulic pressure signal.

10. Method according to Claim 8 or 9, **characterised in that** setting the harvesting speed results in equating the current hydraulic pressure signal with the desired hydraulic pressure signal.

11. Method according to one of Claims 8 to 10, **characterised in that** in further steps the moisture content of the material running over the inclined conveyor (18) is measured, that a moisture signal is generated, and that the moisture signal is supplied to the control unit (80).

12. Method according to Claim 11, **characterised in that** the moisture signal is used to vary the desired hydraulic pressure signal and/or the actual hydraulic pressure signal.

13. Method according to Claim 11 or 12, **characterised in that** the moisture signal is used to directly regulate the harvesting speed.

## Revendications

1. Moissonneuse-batteuse (10), comportant des moyens qui sont en prise avec le sol et sont conçus pour déplacer la moissonneuse-batteuse (10) avec une vitesse de récolte sur le sol, un dispositif de battage, un mécanisme d'entraînement (60) réglable pour actionner le dispositif de battage, qui est réglable au moyen d'un liquide hydraulique, et une commande (80) qui est conçue pour régler la vitesse de récolte, **caractérisée en ce qu'**un capteur de pression hydraulique (86) mesure la pression hydraulique du liquide hydraulique en vue du réglage du mécanisme d'entraînement du dispositif de battage et génère un signal de pression hydraulique et **en ce que** la commande (80) règle la vitesse de récolte en fonction de la pression hydraulique mesurée par le capteur de pression hydraulique (86).

2. Moissonneuse-batteuse (10) selon la revendication 1, **caractérisée en ce qu'**au moins un vérin hydraulique (66) règle le mécanisme d'entraînement (60), en particulier par le réglage d'une poulie à courroie (62), et **en ce que** le capteur de pression hydraulique (86) mesure la pression hydraulique qui est appliquée au vérin hydraulique (66).

3. Moissonneuse-batteuse (10) selon la revendication 1 ou 2, **caractérisée en ce qu'**il peut être appliqué sur la commande (80) un signal du taux de pertes théorique pouvant être commandé par un utilisateur.

4. Moissonneuse-batteuse (10) selon la revendication 3, **caractérisée en ce que** la commande (80) transforme le signal du taux de pertes théorique en un signal de pression hydraulique souhaité qui, conjointement avec le signal de pression hydraulique actuel, commande la vitesse de récolte des moyens qui sont en prise avec le sol.

5. Moissonneuse-batteuse (10) selon l'une quelconque des revendications 1 à 4, **caractérisée en ce que** la moissonneuse-batteuse (10) comporte un convoyeur incliné (18), qui est équipé d'un capteur d'humidité (92), qui est destiné à mesurer l'humidité des produits de récolte transportés à travers le convoyeur incliné (18) et qui transmet un signal d'humidité à la commande (80).

6. Moissonneuse-batteuse (10) selon la revendication 5, **caractérisée en ce que** la commande (80) utilise le signal d'humidité pour modifier le signal de pression hydraulique souhaité et/ou le signal de pression hydraulique réel.

7. Moissonneuse-batteuse (10) selon la revendication 5 ou 6, **caractérisée en ce que** la commande (80) utilise le signal d'humidité pour modifier directement la vitesse de récolte.

8. Procédé de commande de la vitesse de récolte d'une moissonneuse-batteuse (10), qui comporte un mécanisme d'entraînement (60) réglable destiné à actionner un dispositif de battage, comprenant les étapes suivantes : mesure de la pression hydraulique du liquide hydraulique, utilisée pour le réglage du mécanisme d'entraînement du dispositif de battage, et génération d'un signal de pression hydraulique actuel, et réglage de la vitesse de récolte de la moissonneuse-batteuse en fonction du signal de pression hydraulique actuel.

9. Procédé selon la revendication 8, **caractérisé par** l'étape supplémentaire qui consiste à entrer dans une commande (80) un taux de pertes souhaité et à convertir le taux de pertes souhaité en un signal de pression hydraulique souhaité.

10. Procédé selon la revendication 8 ou 9, **caractérisé en ce que** par le réglage de la vitesse de récolte il résulte que le signal de pression hydraulique actuel est égal au signal de pression hydraulique souhaité.

11. Procédé selon l'une quelconque des revendications 8 à 10, **caractérisé en ce que**, dans d'autres étapes, la teneur en humidité des produits de récolte transportés par le convoyeur (18) est mesurée, **en ce qu'**un signal d'humidité est généré et **en ce que** le signal d'humidité est acheminé vers la commande (80).

12. Procédé selon la revendication 11, **caractérisé en ce que** le signal d'humidité est utilisé pour modifier le signal de pression hydraulique souhaité et/ou le signal de pression hydraulique réel.

13. Procédé selon la revendication 11 ou 12, **caractérisé en ce que** le signal d'humidité est utilisé pour régler directement la vitesse de récolte.
